# EUROPEAN PATENT APPLICATION

(11) **EP 4 729 210 A1**
(43) Date of publication of application: **22.04.2026**
(21) Application number: 25204877.2
(22) Date of filing: 26.09.2025
(51) Int. Cl.: B22F 10/28, B22F 10/36, B22F 12/44, B22F 12/45, B22F 12/49, B33Y 10/00, B33Y 30/00, B33Y 50/02, G02B 26/02, G02B 26/06, G02B 26/10, G02B 27/09, G02B 26/08

(54) **APPARATUS AND METHOD FOR ADDITIVELY MANUFACTURING THREE-DIMENSIONAL OBJECTS**

(30) Priority: 14.10.2024 US 202418914491
(71) Applicant: General Electric Company, Cincinnati, Ohio 45215 (US); Concept Laser GmbH, 96215 Lichtenfels (DE)
(72) Inventor: ZIMMERMANN, Maik, 96215 Lichtenfels (DE); STEELE, William Joseph, West Chester, 45069 (US)
(74) Representative: Openshaw & Co.

(57) **Abstract**

A method for additively manufacturing three-dimensional objects includes modulating a first and second sets of modulation segments of a modulation device to respective different first and second modulation states. The first set of modulation segments is addressed via one or more laser beams. The one or more laser beams are switched from addressing the first set of modulation segments to addressing the second set of modulation segments via at least one of steering the one or more laser beams from the first set of modulation segments to the second set of modulation segments or switching from a first laser beam source generating the one or more laser beams addressing the first set of modulation segments to a second laser beam source generating the one or more laser beams addressing the second set of modulation segments. The one or more laser beams are directed onto a powder bed.

## Description

### FIELD

The present disclosure relates to additive manufacturing of three-dimensional objects.

### BACKGROUND

Three-dimensional objects may be additively manufactured using a powder bed fusion process in which an energy or laser beam is directed onto a powder bed to melt and/or sinter sequential layers of powder material. The properties of the three-dimensional object formed by melting and/or fusing the powder material may depend at least in part on one or more characteristics of the energy beam. The laser beam has beam properties defined by one or more laser beam parameter(s) or a beam profile defined by one or more laser beam parameter(s).

### BRIEF DESCRIPTION OF THE DRAWINGS

A full and enabling disclosure of the present disclosure, including the best mode thereof, directed to one of ordinary skill in the art, is set forth in the specification, which makes reference to the appended FIGS., in which:
FIG. 1 is a schematic diagram of an apparatus for additively manufacturing a three-dimensional object in accordance with an exemplary aspect of the present disclosure.
FIG. 2 is a schematic diagram of an apparatus for additively manufacturing a three-dimensional object in accordance with an exemplary aspect of the present disclosure.
FIG. 3 is a schematic diagram of an apparatus for additively manufacturing a three-dimensional object in accordance with an exemplary aspect of the present disclosure.
FIG. 4 is a schematic diagram of an apparatus for additively manufacturing a three-dimensional object in accordance with an exemplary aspect of the present disclosure.
FIG. 5 is a schematic diagram of an apparatus for additively manufacturing a three-dimensional object in accordance with an exemplary aspect of the present disclosure.
FIG. 6 is a schematic diagram of an apparatus for additively manufacturing a three-dimensional object in accordance with an exemplary aspect of the present disclosure
FIG. 7 is a flow diagram depicting an embodiment of a method of additively manufacturing a three-dimensional object in accordance with various aspects of the present disclosure.
FIG. 8 is a block diagram depicting an example computing system according to exemplary embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "upstream" and "downstream" refer to the relative direction with respect to an energy or laser beam along an optical pathway. For example, "upstream" refers to the direction from which the laser beam originates or emanates, and "downstream" refers to the direction to which the laser beam is propagating.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The phrases "from X to Y" and "between X and Y" each refers to a range of values inclusive of the endpoints (i.e., refers to a range of values that includes both X and Y). Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively, suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 micrometers (µm) and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is directed to an additive manufacturing apparatus using modulation device. A modulation device such as, by way of non-limiting example, a spatial light modulator may be used to control or modulate an intensity, phase, or polarization of a laser beam. An exemplary embodiment of a spatial light modulator is a liquid crystal on silicon (LCoS) device. Liquid crystals are birefringent such that applying a voltage to a cell, pixel, or modulation segment of the modulation device causes a change in a refractive index of the modulation segment. The addressable modulation segments may be actuated or controlled to cause the corresponding modulation segment to be placed into one or more different modulation states. As used herein, the term "modulation state" refers to a particular state of the modulation segment caused by a particular voltage application or alignment of molecules of the modulation segment to change the phase, amplitude and/or polarization state of the laser beam incident of the particular modulation segment. However, changing the modulation state of one or more of the modulation segments to change the characteristics of the laser beam incident on a powder bed is limited at least by the layer thickness of the liquid crystal and the inertia of the liquid crystals such that changing or switching between modulation states for one or more modulation segments may adversely affect manufacturing efficiency of the three-dimensional object.

The inventors of the present disclosure found that utilization of a scanning device upstream of the modulation device increases the speed at which the laser beam properties can be changed or switched. In particular, a scanning device located upstream of the modulation device is used for a fast laser beam deflection in 1- or 2-dimensional directions on the surface of the modulation device. At least one laser beam can be moved across the surface of the modulation device where different modulation segments or groups of modulation segments to introduce a local or a well calculated gradual change of the phase, amplitude and/or polarization state of the laser beam. The modulated laser beam is reflected or transmitted by the modulation device and propagated through a relay system towards an optical system, such as a magnification, demagnification or deflection system to direct the modulated laser beam along a scan path over a powder bed. The scanning device may be configured as a telecentric scanning device such that the laser beam only moves laterally during scanning and does not introduce any angular offset into the beam. In exemplary embodiments, the scanning device may be configured using Galvanometer scanners, plane-parallel plate scanners or other scanning devices. A plurality of laser beams can also be scanned in parallel or alternately on the modulation device, or parallel beam bundles can be used that are switched alternately or simultaneously. The time advantage arises from the fact that, compared to a single modulation state which is switched relatively slowly, a plurality of different modulation states may be calculated in parallel and can be simultaneously presented on the modulation device with each one being addressed on the modulation device by quickly scanning the laser beam across the modulation device by the upstream scanning device. The increase in speed scales with the number of modulation states displayed simultaneously. Embodiments of the present disclosure are especially advantageous for applications where the laser beam needs to be switched or modulated very quickly, such as during laser beam scanning of a multi-spot array.

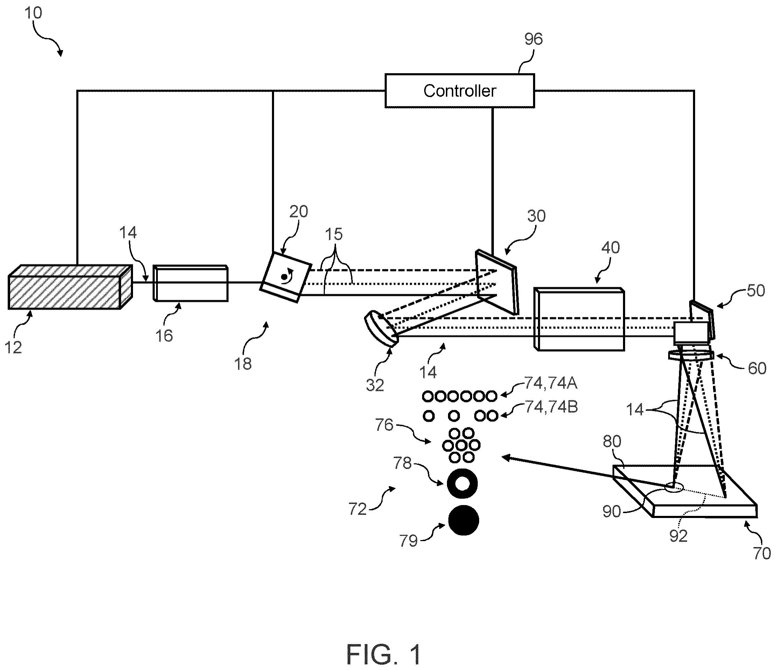

Referring now to FIG. 1, an exemplary embodiment of an apparatus 10 for additively manufacturing three-dimensional objects is illustrated. In exemplary embodiments, the apparatus 10 is an additive manufacturing system or machine. The apparatus 10 includes several components arranged to effectively generate a laser beam 14 that is manipulated and directed to form a three-dimensional object on a build platform 70.

In exemplary embodiments, one or more laser beam sources 12 are configured to generate one or more laser beams 14. The laser beam source 12 can include various types of lasers suitable for additive manufacturing processes such as, by way of non-limiting example, fiber lasers or CO₂ lasers, depending on the specific application requirements. The generated laser beam 14 is first directed towards a beam shaping device 16, which is disposed downstream of the laser beam source 12. The beam shaping device 16 is configured to alter the cross-sectional shape, size, and/or profile of the laser beam 14 to suit the needs of the particular additive manufacturing process. The beam shaping device 16 may include one or more optical elements used to collimate the laser beam 14, transform a profile of the laser beam 14, or convert a shape of the laser beam 14. This alteration can help in optimizing the energy distribution across the beam, thus enhancing the precision and quality of the manufactured object.

Downstream of the beam shaping device 16 and upstream of a modulation device 30, a scanning device 18 is positioned. The scanning device 18 is configured to scan the laser beam 14 over at least a portion of the modulation device 30. In this exemplary embodiment, the scanning device 18 includes a telecentric scanning device 20, which ensures that the laser beam 14 is scanned laterally over at least the portion of the modulation device 30 without introducing an angular offset into the laser beam 14. However, it should be understood that other types of scanning devices 18 could be used such as, by way of non-limiting example, a Galvanometer scanner or plane-parallel plate scanner.

The modulation device 30, positioned downstream of the laser beam source 12 and the scanning device 18, is configured to change at least one laser beam parameter of the laser beam 14. This modulation can include changes in amplitude, phase, or polarization of the laser beam 14, thereby enabling precise control over the energy delivered to each point on the build platform 70. In exemplary embodiments, the modulation device 30 is a spatial light modulator such as, by way of non-limiting example, an LCoS device. However, it should be understood that other types of modulation devices 30 may be used such as, by way of non-limiting example, digital micro-mirror devices (DMDs). The modulation device 30 may be translucent, such as a liquid crystal display (LCD), or reflective, such as an LCoS. The modulation device 30 comprises a plurality of modulation segments 110, allowing for differential modulation across different segments of the laser beam 14.

In the illustrated embodiment, the apparatus 10 is configured as a folded setup having a mirror device 32 positioned downstream of the modulation device 30 to reflect the modulated laser beam 14 to an optical relay device 40. The optical relay device 40 is disposed downstream of the modulation device 30 and the mirror device 32. The optical relay device 40 is configured to relay or transport the modulated laser beam 14 from the modulation device 30 over a particular distance to a deflection device 50. The optical relay device 40 ensures that the integrity and characteristics of the modulated laser beam 14 are maintained during transmission to the deflection device 50. In exemplary embodiments, the optical relay device 40 may include one or more optical elements such as, by way of non-limiting example, a 4f optical system or lens arrangement.

The deflection device 50, positioned downstream of the modulation device 30 and the mirror device 32, is configured to selectively scan or direct the laser beam 14 onto a powder bed 80 residing on a build platform 70. The deflection device 50 can include mirrors or other optical elements that can be precisely controlled to direct the laser beam 14 at specific locations and scan the laser beam 14 across the powder bed 80 to melt and fuse powder build material according to the desired object geometry. The deflection device 50 may include one or more optical elements for steering the laser beam 14, performing magnification or demagnification operations on the laser beam 14, or any of the foregoing in combination. The deflection device 50 may include any type of scanning device such as, by way or non-limiting example, a Galvanometer scanner.

In the illustrated embodiment, a focusing lens assembly 60 may be associated with the deflection device 50 or located downstream of the deflection device 50 to focus the laser beam 14 onto the powder bed 80. The focusing lens assembly 60 may include one or more optical elements that focus the laser beam 14 onto a build plane.

The build platform 70 supports the powder bed 80, which contains the build material in powder form that is to be fused by the laser beam 14. The laser beam 14 may be scanned or directed across the powder bed via a scanning path 92, controlled by the deflection device 50, to ensure that the laser beam 14 follows a predetermined path over the surface of the powder bed 80, dictated by the desired geometry of the object being manufactured. In exemplary embodiments, various spot patterns 72 may be generated in a beam shaping area 90 or elsewhere on the powder bed 80 by the apparatus 10 such as, by way of non-limiting example, one or more different line spot arrays 74, a hexagonal spot array 76, a ring spot 78, and a top hat spot 79 (also referred to as a flat top spot). A top hat or flat top spot or beam has a uniform or near-uniform energy density or intensity profile at one or more cross-sections through the beam. It should be understood that the spot patterns 72 may include other types of arbitrary and/or customized spot arrays. The spot patterns 72 may have varied spot sizes within the array, equidistant or non-equidistant spacing between respective spots, or various quantities of spots within the array. For example, embodiments of the present disclosure enable quick switching between, by way of non-limiting example, a line spot array 74A having six spots to a line spot array 74B having four spots with varying distances between certain spots. Each of these spot patterns 72 represents different configurations of the laser beam 14 that can be achieved through the controlled manipulation of the modulation device 30. The ability to quickly switch between these spot patterns 72 provides the apparatus 10 with versatile capabilities in addressing different geometric and material requirements during the additive manufacturing process.

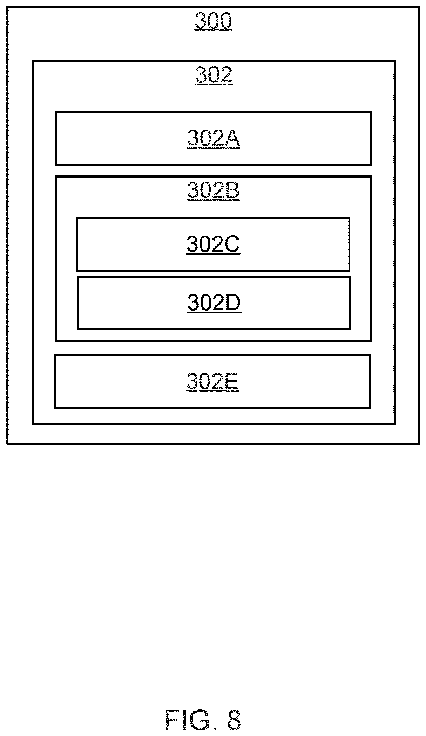

In the illustrated embodiment, one or more controllers 96 are communicatively coupled to one or more of the laser beam source 12, the scanning device 18, the modulation device 30, and the deflection device 50. The controller 96 is configured to generate control signals to selectively control the on, off, and/or modulation state of the laser beam source 12 and/or the power of the laser beam source 12, the scanning of the laser beam 14 over the modulation device 30, the modulation state or states of the modulation device 30, and/or the scanning of the laser beam 14 over the powder bed 80. In exemplary embodiments, the controller 96 is configured to generate one or more control signals to synchronize the operation of the laser beam source 12 with the modulation states of the modulation device 30 and the scanning of the laser beam 14 over or across the modulation device 30. This integrated control system allows for synchronized operation of the scanning and modulation processes for achieving high-quality manufacturing outcomes. The controller 96 may be configured similar to exemplary computing devices of the computing system 300 described below with reference to FIG. 8.

In operation, the laser beam source 12 generates the laser beam 14 which is directed downstream to the beam shaping device 16. In exemplary embodiments, the beam shaping device 16 collimates the laser beam 14 and directs the laser beam 14 downstream to become incident upon the scanning device 18. The scanning device 18 scans or steers the collimated laser beam 14 over at least a portion of the modulation device 30 such that each beamlet 15 of the laser beam 14 is transformed to a different state by the modulation device 30 based at least one the modulation state of the particular modulation segment incident upon by the respective beamlet 15 such as, by way of non-limiting example, a phase modulation. In exemplary embodiments, the modulation device 30 may be manipulated or controlled by the controller 96 to have different groups or sets of modulations segments set to different modulation states simultaneously. By scanning or steering the laser beam 14 across or over the modulation device 30 by the scanning device 18 (e.g., without turning off the laser beam source 12), the parameters of the laser beam 14 can be switched quickly by scanning the laser beam 14 from a first group or set of modulation segments of the modulation device 30 set to a first modulation state to a second group or set of modulation segments of the modulation device 30 set to a second modulation state different than the first modulation state. The speed of the scanning device 18 is faster than the time to change a modulation state of the modulation device 30. Thus, by scanning the laser beam 14 across different portions of the modulation device 30 set to different modulation states results in a faster change to a parameter of the laser beam 14 than changing a modulation state for particular modulation segments of the modulation device 30 impinged by the laser beam 14.

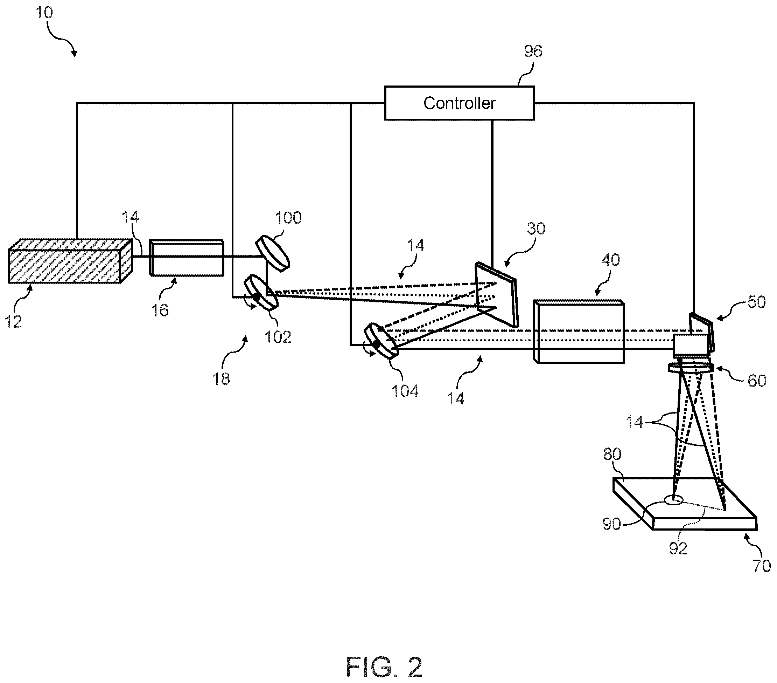

Referring now to FIG. 2, another exemplary embodiment of the apparatus 10 for additively manufacturing three-dimensional objects is schematically depicted according to the present disclosure. The apparatus 10 may be at least partly configured similar to the apparatus 10 depicted in FIG. 1, like numerals utilized to refer to like elements. In the illustrated embodiment, the apparatus 10 includes the scanning device 18 positioned downstream of the beam shaping device 16 and upstream of the modulation device 30. In the illustrated embodiment, the scanning device 18 is configured having mirror devices 100 and 102. In exemplary embodiments, one or more of the mirror devices 100 and 102 are movable. In the illustrated embodiment, mirror device 102 is located downstream from the mirror device 100 and is movable to scan the laser beam over at least a portion of the modulation device 30. In exemplary embodiments, the mirror device 102 is pivotal to steer the laser beam 14 towards and across the modulation device 30. The ability to move the mirror device 102 enables dynamic adjustment of the path of the laser beam 14 across the modulation device 30 to different portions of the modulation device 30 set to different modulation states to quickly change one or more parameters of the laser beam 14 directed onto the powder bed 80.

In the illustrated embodiment, downstream from the modulation device 30, is a mirror device 104. In the illustrated embodiment, the apparatus 10 is configured as a folded setup having the mirror device 104 positioned downstream of the modulation device 30 to reflect the modulated laser beam 14 to the optical relay device 40. In the illustrated embodiment, the mirror device 104 is movable to receive the modulated laser beam 14 from the modulation device 30 and reflect the modulated laser beam to the optical relay device 40. In exemplary embodiments, the mirror device 104 may be a Galvanometer device.

In the illustrated embodiment, the controller 96 is integrally and/or communicatively connected to one or more of the laser beam source 12, the scanning device 18, the modulation device 30, the mirror devices 102, 104, and the deflection device 50. The controller 96 is configured to generate control signals that control operation of the laser beam source 12 and the operation of the movable mirror devices 102, 104, the modulation states of the modulation device 30, and the scanning operations of the deflection device 50.

In operation, the laser beam source 12 generates the laser beam 14 which is directed downstream to the beam shaping device 16. In exemplary embodiments, the beam shaping device 16 collimates the laser beam 14 and directs the laser beam 14 downstream to become incident upon the mirror devices 100 and 102. The mirror devices 100 and 102 scan the collimated laser beam 14 over at least a portion of the modulation device 30 such that each beamlet 15 of the laser beam 14 is transformed to a different state by the modulation device 30 based at least one the modulation state of the particular modulation segment incident upon by the respective beamlet 15 such as, by way of non-limiting example, a phase modulation. In exemplary embodiments, the modulation device 30 may be manipulated or controlled by the controller 96 to have different groups or sets of modulations segments set to different modulation states simultaneously. By scanning the laser beam 14 across or over the modulation device 30 by the mirror devices 100, 102, the parameters of the laser beam 14 can be switched quickly by scanning the laser beam 14 from a first group or set of modulation segments set to a first modulation state to a second group or set of modulation segments set to a second modulation state different than the first modulation state.

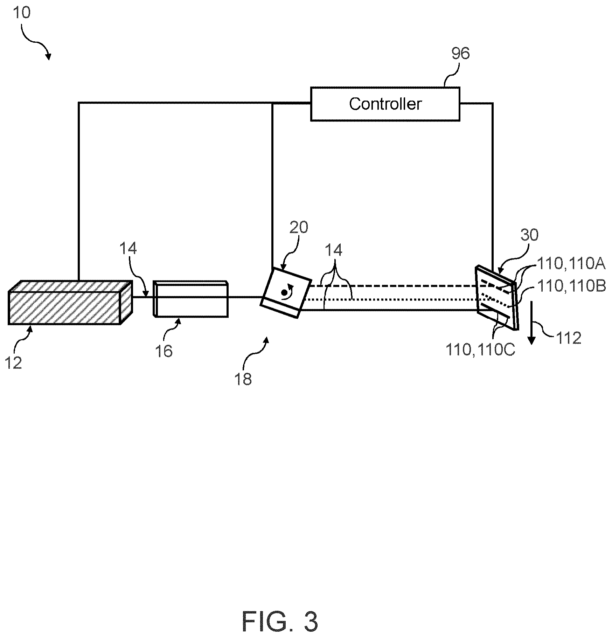

Referring now to FIG. 3, another exemplary embodiment of the apparatus 10 for additively manufacturing three-dimensional objects is schematically depicted in accordance with the present disclosure. The apparatus 10 may be at least partly configured similar to the apparatus 10 depicted in FIG. 1, like numerals utilized to refer to like elements. In the illustrated embodiment, several elements are omitted from FIG. 3 for ease of description such as the mirror device 32, the optical relay device 40, and the deflection device 50. However, it should be understood the apparatus 10 of FIG. 3 may include such elements for directing the laser beam 14 onto the powder bed 80 as depicted and described in connection with FIG. 1.

In the illustrated embodiment, the apparatus 10 is configured for one-dimensional scanning of the laser beam 14 in the form of a line across at least a portion of the modulation device 30 in a scan direction 112. In exemplary embodiments, the beam shaping device 16 is configured to shape the laser beam 14 received from the laser beam source 12 to a line shape. In the illustrated embodiment, the modulation device 30 includes modulation segments 110 each configured to modulate at least a portion of the laser beam 14 incident upon such modulation segment 110. The modulation segment 110 may correspond to a pixel, a micromirror, or other addressable element for modifying at least one of an amplitude, phase, or polarization of the laser beam 14. In the illustrated embodiment, a first group or set of modulation segments 110A may be set to a first modulation state, a second group or set of modulation segments 110B may be set to a second modulation state different than the first modulation state, and a third group or set of modulation segments 110C may be set to a third modulation state different than the first or second modulation states. It should be understood that the quantity and/or positioning of the different modulation states displayed by different modulation segments 110 may vary.

In the illustrated embodiment, the controller 96 is integrally and/or communicatively connected to one or more of the laser beam source 12, the scanning device 18, and the modulation device 30. The controller 96 is configured to generate control signals that control operation of the laser beam source 12, the scanning device 18, and the modulation states of the modulation device 30. In exemplary embodiments, the first, second, and third modulation states may be controlled by the controller 96, calculated in parallel, and set or displayed concurrently or in substantial proximity in time such that the scanning device 18 can scan the laser beam 14 from one group or set of modulation segments 110 set to one modulation state to a different group of set of modulation segments 110 set to a different modulation state. Compared to a time to change the modulation state of a particular modulation segment 110, the scanning device 18 can change the position of the laser beam 14 on the modulation device 30 much faster. As an example, the first group or set of modulation segments 110A may be set to a modulation state forming a multi-spot array of five equidistantly-spaced spots each of the same size. The second group or set of modulation segments 110B may be set to a modulation state forming a multi-spot array of four spots with two or more of the spots being non-equidistantly-spaced. The scanning device 18 can scan the laser beam 14 across the modulation device 30 in the scan direction 112 from the first group or set of modulation segments 110A to the second group or set of modulation segments 110B to quickly effectuate a change in the parameters of the laser beam.

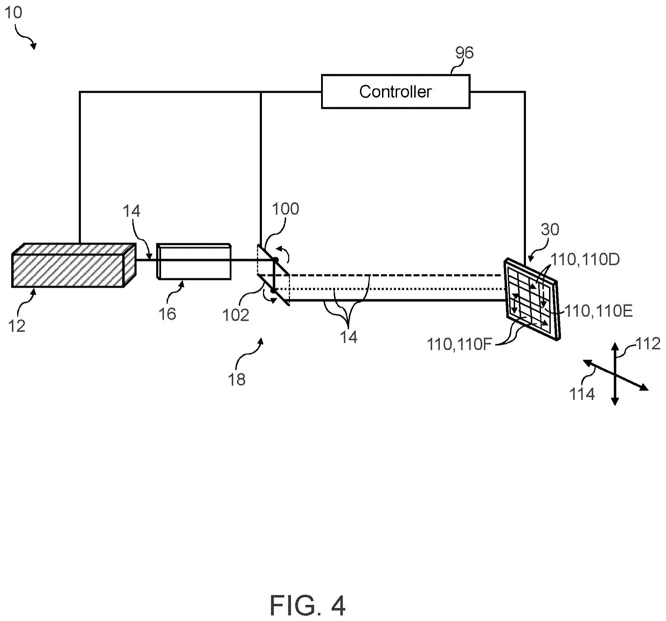

Referring now to FIG. 4, another exemplary embodiment of the apparatus 10 for additively manufacturing three-dimensional objects is schematically depicted according to the present disclosure. The apparatus 10 may be at least partly configured similar to the apparatus 10 depicted in FIG. 2, like numerals utilized to refer to like elements. In the illustrated embodiment, several elements are omitted from FIG. 4 for ease of description such as the mirror device 104, the optical relay device 40, and the deflection device 50. However, it should be understood the apparatus 10 of FIG. 4 may include such elements for directing the laser beam 14 onto the powder bed 80 as depicted and described in connection with FIG. 2.

In the illustrated embodiment, the apparatus 10 is configured for two-dimensional scanning of the laser beam 14 across at least a portion of the modulation device 30 in at least two different scan directions 112 and 114. In the illustrated embodiment, scan directions 112 and 114 are perpendicular to each other. In the illustrated embodiment, different groups or sets of modulation segments 110D, 110E, 110F are set to different modulation states. In the illustrated embodiment, the controller 96 is integrally and/or communicatively connected to one or more of the laser beam source 12, the scanning device 18, and the modulation device 30. The controller 96 is configured to generate control signals that control operation of the laser beam source 12, the scanning device 18, and the modulation states of the modulation device 30. The controller 96 may be used to control the modulation states of the different modulation segments 110 of the modulation device 30. In FIG. 4, mirror devices 100 and 102 are movable such that manipulation of the mirror devices 100 and 102 enable the laser beam 14 to be scanned across the modulation device 30 in the scan directions 112 and 114 to quickly change the parameters of the laser beam 14 based on the different modulation states displayed by the modulation device 30. The mirror devices 100 and 102 may include, by way of non-limiting example, pivot mirrors or two-axis piezo mirrors. Thus, in exemplary embodiments, the mirror devices 100 and 102 may be manipulated or controlled by the controller 96 to scan the laser beam 14 in the scan directions 112 and 114 to scan the laser to the modulation segments 110D corresponding to a first modulated state of the laser beam 14, from the modulation segments 110D to the modulation segments 110E corresponding to a different modulated state of the laser beam 14, and from the modulation segments 110E to the modulation segments 110F corresponding to another different modulated state of the laser beam 14.

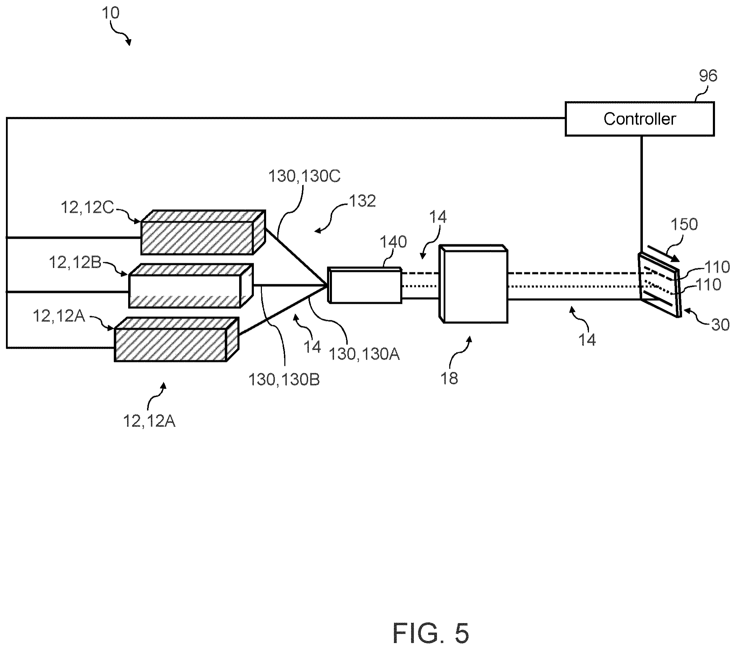

Referring now to FIG. 5, another exemplary embodiment of an apparatus 10 for additively manufacturing three-dimensional objects is schematically depicted in accordance with the present disclosure. The apparatus 10 may be at least partly configured similar to the apparatus 10 depicted in FIGS. 1 and 3, like numerals utilized to refer to like elements. In the illustrated embodiment, the apparatus 10 includes several elements are omitted from FIG. 5 for ease of description such as the mirror device 104, the optical relay device 40, and the deflection device 50. However, it should be understood the apparatus 10 of FIG. 5 may include such elements for directing the laser beam 14 onto the powder bed 80 as depicted and described in connection with FIG. 1.

In the illustrated embodiment, the apparatus 10 includes a plurality of laser beam sources 12, indicated by three laser beam sources 12A, 12B, and 12C in FIG. 5. It should be understood that a greater or fewer quantity of laser beam sources 12 may be used. In the illustrated embodiment, the laser beam sources 12A, 12B, 12C are each coupled to a laser array collimator 140 located downstream from the laser beam sources 12A, 12B, 12C via a laser array 132 formed by respective laser fibers 130, indicated by laser fibers 130A, 130B, 130C connected to the respective laser beam sources 12A, 12B, 12C in FIG. 5. However, it should be understood that the laser beam sources 12 may include other types of laser beam generation devices such as, by way of non-limiting example, a laser diode array. In the illustrated embodiment, the laser array collimator 140 receives the laser beams 14 from each of the laser beam sources 12A, 12B, 12C and generates a collimated laser beam 14. The collimated laser beam 14 is transmitted downstream by the laser array collimator 140 to the scanning device 18. The scanning device 18 may be the telecentric scanning device 20 (FIG. 1) or another type of scanning device 18 such as, by way of non-limiting example, a Galvanometer device or a plane-parallel plate scanner. In the illustrated embodiment, the apparatus 10 is configured for one-dimensional scanning of the laser beam 14 over at least a portion of the modulation device 30 in the scan direction 150. However, it should be understood that the apparatus 10 may be otherwise configured for multi-dimensional scanning such as depicted and described in connection with FIG. 4. As described above, the controller 96 is communicatively coupled to the laser beam sources 12A, 12B, 12C, the scanning device 18, and the modulation device 30. The controller 96 controls the laser beam sources 12A, 12B, 12C, the scanning device 18, and/or the modulation device 30, generating control signals that control the operation of the laser beam sources 12A, 12B, 12C, control the scanning patterns of the laser beam 14 across the modulation device 30, and/or the modulation states of the modulation device 30. By managing and/or controlling the laser beam sources 12A, 12B, 12C, the scanning device 18, and/or the modulation device 30, the controller 96 can set various modulation segments 110 to particular modulation states in advance such that, as the laser beam 14 is scanned across the powder bed 80 (FIG. 1) to various locations of the three-dimensional object being formed, the scanning device 18 can be controlled to direct or scan the laser beam to specific locations of the modulation device 30 to quickly change the parameters of the laser beam 14 as the laser beam is being scanned across the powder bed 80 (FIG. 1).

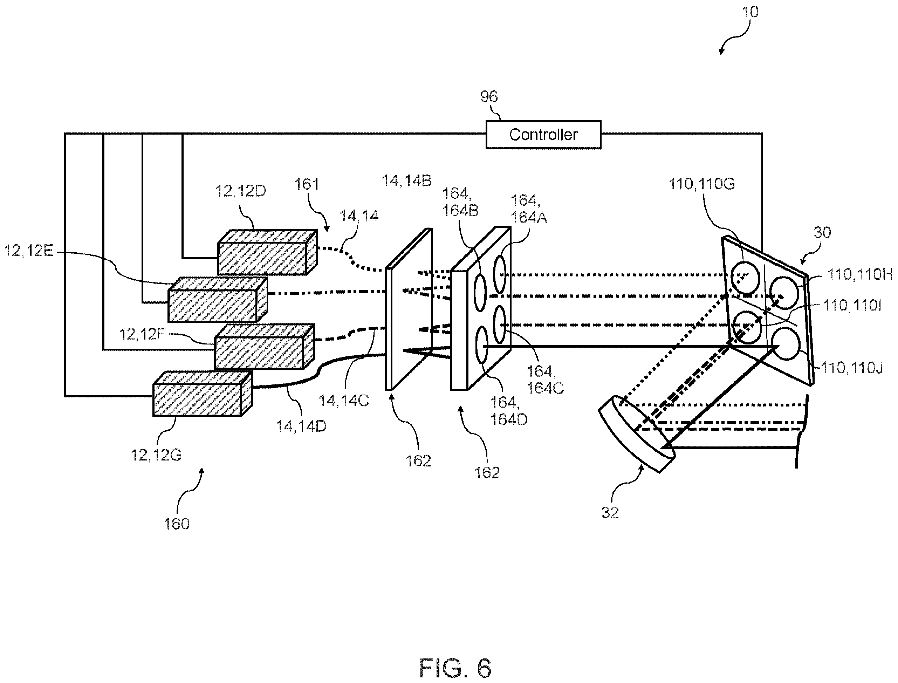

Referring now to FIG. 6, another exemplary embodiment of an apparatus 10 for additively manufacturing three-dimensional objects is schematically depicted in accordance with the present disclosure. The apparatus 10 may be at least partly configured similar to the apparatus 10 depicted in FIGS. 1 and 3, like numerals utilized to refer to like elements. In the illustrated embodiment, the apparatus 10 includes several elements that are omitted from FIG. 5 for ease of description such as the optical relay device 40 and the deflection device 50. However, it should be understood the apparatus 10 of FIG. 6 may include such elements for directing the laser beams 14 onto the powder bed 80 as depicted and described in connection with FIG. 1.

In the illustrated embodiment, the apparatus 10 includes a laser array 160 formed of a plurality of laser beam sources 12, indicated by four laser beam sources 12D, 12E, 12F, and 12G in FIG. 6. It should be understood that a greater or fewer quantity of laser beam sources 12 may be used. In the illustrated embodiment, the laser beam sources 12D, 12E, 12F, and 12G include fiber laser beam sources such that a fiber bundle 161 formed of optical fibers extending from each of the respective laser beam sources 12D, 12E, 12F, and 12G is coupled into the laser array 132. However, it should be understood that the laser beam sources 12D, 12E, 12F, and 12G may include other types of laser beam generating devices such as, by way of non-limiting example, a diode laser array capable of free space laser beam propagation of a plurality of laser beams. In the illustrated embodiment, the laser beam sources 12D, 12E, 12F, and 12G generate laser beams 14A, 14B, 14C, and 14D, respectively. In the illustrated embodiment, a lens array 162 is positioned downstream of the laser array 132. The lens array 162 may include one or more lenses 164 for collimating the respective laser beams 14A, 14B, 14C, and 14D such as, by way of non-limiting example, lenses 164A, 164B, 164C, and 164D.

Downstream from the lens array 162 is the modulation device 30. In the illustrated embodiment, the modulation device 30 includes four sets of modulation segments 110, indication by modulation segments 110G, 110H, 110I, and 110J in FIG. 6. Two or more sets of the modulation segments 110G, 110H, 110I, and 110J are set to different modulation states such that a particular laser beam 14 incident on a particular modulation segment 110 set to a particular modulation state has a different laser beam parameter from a laser beam 14 incident on a different modulation segment 110 set to a different modulation state. It should be understood that the quantity of modulation segments 110 set to different modulation states and/or the quantity of different modulation states for the modulation device 30 may vary.

In the illustrated embodiment, the controller 96 is integrally and/or communicatively coupled to the laser beam sources 12D, 12E, 12F, and 12G and the modulation device 30. The controller 96 controls the actuation and/or modulation of the laser beam sources 12D, 12E, 12F, and 12G and the modulation device 30, generating control signals that control the operation of the laser beam sources 12D, 12E, 12F, and 12G and the modulation states of the modulation device 30. By managing and/or controlling the laser beam sources 12D, 12E, 12F, and 12G and the modulation device 30, the controller 96 can set various sets of modulation segments 110 to particular modulation states in advance such that the laser beam sources 12D, 12E, 12F, and 12G can be sequentially modulated and/or turned on/off to quickly change the parameters of the laser beam 14 directed onto the powder bed 80 (FIG. 1).

In exemplary embodiments, the controller 96 may send a control signal to the laser beam source 12D to actuate or turn on the laser beam source 12D while one or more of the laser beam sources 12E, 12F, or 12G remain off. The laser beam 14A emitted by the laser beam source 12D is collimated by the lens array 162, such as by the lens 164A, and travels downstream to be incident on the set of modulation segments 110G. The modulation segments 110G modulate the laser beam 14A to a corresponding laser beam parameter, and the laser beam 14A is directed downstream by the modulation device 30 toward the mirror device 32. The mirror device 32 reflects the laser beam 14A downstream toward the powder bed 80 (FIG. 1). To change the parameters of the laser beam 14 directed toward the powder bed 80 (FIG. 1), the controller 96 may turn off the laser beam source 12D and turn on one or more of the laser beam sources 12E, 12F, and/or 12G. In exemplary embodiments, the laser beam sources 12D, 12E, 12F, and 12G are positioned in the laser array 132 such that the laser beams 14A, 14B, 14C, 14D emitted by the respective laser beam sources 12D, 12E, 12F, and 12G are incident on the respective modulation segments 110G, 110H, 110I, and 110J. Accordingly, with at least one set of modulation segments 110 set to a particular modulation state, one or more other modulation segments 110 may be set to one or more different modulation states. In other words, the modulation device 30 may have a plurality of modulation states set simultaneously and/or substantially simultaneously such that by synchronizing the actuation of the laser beam sources 12D, 12E, 12F, and 12G with the setting of the modulation states of the modulation segments 110G, 110H, 110I, and 110J, the laser beam sources 12D, 12E, 12F, and 12G may be switched on/off, such as in a particular sequence, to quickly change the laser beam parameters of the laser beam 14 directed onto the powder bed 80 (FIG. 1). In other words, with the modulation device 30 having two or more sets of modulation segments 110 set to different modulation states, the controller 96 may actuate and/or de-actuate one or more of the laser beam sources 12D, 12E, 12F, and 12G according to a particular sequence to change the laser beam parameters of the laser beam 14 directed onto the powder bed 80 (FIG. 1) to cause different sets of the modulation segments 110 to be addressed by the laser beam 14. Thus, by way of non-limiting example, the laser beam 14 may be switched from addressing a first set of modulation segments 110 set to a first modulation state to addressing a second set of modulation segments 110 set to a second modulation state by switching between different the laser beam sources 12D, 12E, 12F, and 12G generating the laser beam 14 onto the modulation device 30.

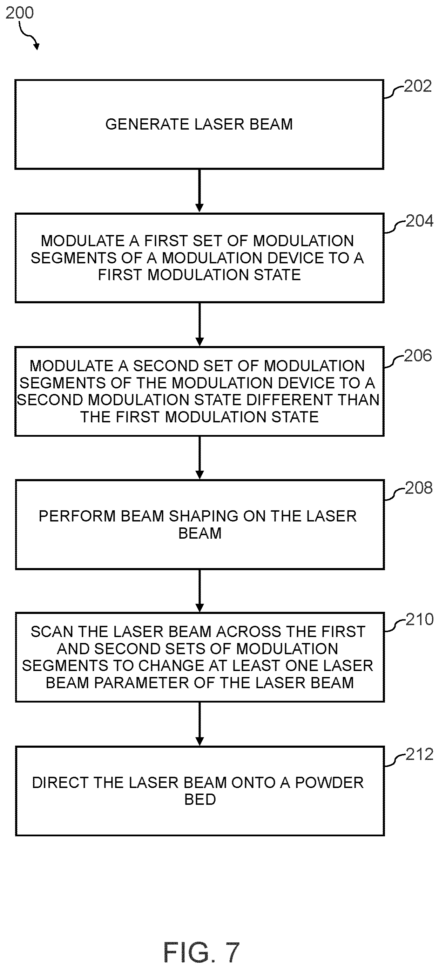

Referring now to FIG. 7, a flow diagram is presented depicting an exemplary embodiment of a method 200 for additively manufacturing three-dimensional objects in accordance with various aspects of the present disclosure. The method 200 illustrates a series of steps designed to control the characteristics of a laser beam in a manner that optimizes the additive manufacturing process, thereby enhancing the quality and precision of the manufactured objects.

A step 202 of the method 200 involves generating the laser beam 14. This step is performed by the laser beam source 12, which is configured to produce a coherent beam of light suitable for processing materials in an additive manufacturing environment. The laser beam 14 generated in this step serves as the fundamental tool for melting and fusing material in subsequent steps of the manufacturing process.

Following the generation of the laser beam 14, the method 200 proceeds to step 204, where a first set of modulation segments 110 of a modulation device 30 is modulated to a first modulation state. This modulation involves altering at least one parameter of the laser beam, such as its amplitude, phase, or polarization, to suit specific requirements of the manufacturing process. The modulation device 30, equipped with multiple modulation segments, allows for precise control over the beam characteristics, enabling selective modification of the laser beam 14.

Continuing to step 206, a second set of modulation segments 110 of the modulation device 30 is modulated to a second modulation state, which is different from the first modulation state. This step allows for the creation of the laser beam with one or more different parameters, thereby enabling more complex control over the energy deposition in the material being processed. The ability to modulate different modulation segments 110 to different modulation states enhances the adaptability of the process to various geometric and material requirements.

At step 208, beam shaping is performed on the laser beam 14. This step, involving the beam shaping device 16, adjusts the cross-sectional profile of the laser beam 14 to optimize its interaction with the material. Beam shaping can include focusing or diffusing the laser beam 14, as well as adjusting its shape to match specific patterns of the design of the object being manufactured.

The method 200 then advances to step 210, where the laser beam 14 is scanned across the first and second sets of modulation segments 110 to change at least one laser beam 14 parameter. This scanning, performed by the scanning device 18, enables fast changes to the parameters of the laser beam 14 using different modulation segments 110 set to different modulation states.

Finally, at step 212, the laser beam, now fully modulated and shaped, is directed onto the powder bed 80. This step involves the deflection device 50, which steers the modulated and shaped laser beam 14 onto the surface of the powder bed 80 where the material is melted and fused to form the three-dimensional object.

FIG. 8 provides an example computing system 300 according to example embodiments of the present disclosure. The computing devices or elements described herein, such as the controller 96 (FIGS. 1-6), may include various components and perform various functions of the computing system 300 described below, for example.

As shown in FIG. 8, the computing system 300 can include one or more computing device(s) 302. The computing device(s) 302 can include one or more processor(s) 302A and one or more memory device(s) 302B. The one or more processor(s) 302A can include any suitable processing device, such as a microprocessor, microcontroller, integrated circuit, logic device, and/or other suitable processing device. The one or more memory device(s) 302B can include one or more computer-executable or computer-readable media, including, but not limited to, non-transitory computer-readable media, RAM, ROM, hard drives, flash drives, and/or other memory devices.

The one or more memory device(s) 302B can store information accessible by the one or more processor(s) 302A, including computer-readable instructions 302C that can be executed by the one or more processor(s) 302A. The computer-readable instructions 302C can be any set of instructions that when executed by the one or more processor(s) 302A, cause the one or more processor(s) 302A to perform operations. In some embodiments, the computer-readable instructions 302C can be executed by the one or more processor(s) 302A to cause the one or more processor(s) 302A to perform operations, such as any of the operations and functions for which the computing system 300 and/or the computing device(s) 302 are configured, such as controlling the actuation or modulation state of one of more of the laser beam sources 12, modulation states of the modulation device 30, the scanning of the laser beam 14 by the scanning device 18, the deflection of the laser beam 14 by the deflection device 50, or any combination of the foregoing. The computer-readable instructions 302C can be software written in any suitable programming language or can be implemented in hardware. Additionally, and/or alternatively, the computer-readable instructions 302C can be executed in logically and/or virtually separate threads on processor(s) 302A. The memory device(s) 302B can further store data 302D that can be accessed by the processor(s) 302A. For example, the data 302D can include models, lookup tables, databases, etc.

The computing device(s) 302 can also include a network interface 302E used to communicate, for example, with the other components of the computing system 300 (e.g., via a communication network). The network interface 302E can include any suitable components for interfacing with one or more network(s), including for example, transmitters, receivers, ports, controllers, antennas, and/or other suitable components. One or more devices can be configured to receive one or more commands from the computing device(s) 302 or provide one or more commands to the computing device(s) 302.

Thus, in exemplary embodiments, the present inventors have found that that utilizing a scanning device upstream of a light modulation device increases the speed at which the laser beam properties can be changed or switched. In particular, a scanning device located upstream of the modulation device is used for a fast laser beam deflection over the surface of the modulation device. At least one laser beam can be moved across the surface of the modulation device where different modulation segments or groups of modulation segments to introduce a local or a well calculated gradual change of the phase, amplitude and/or polarization state of the laser beam. The scanning device may be configured as a telecentric scanning device such that the laser beam only moves laterally during scanning and does not introduce any angular offset into the beam, or the scanning device may be configured as a Galvanometer scanner, plane-parallel plate scanner, or other type of scanning devices. A plurality of laser beams can also be scanned in parallel or alternately on the modulation device, or parallel beam bundles can be used that are switched alternately or simultaneously. The time advantage arises from the fact that, compared to a single modulation state which is switched relatively slowly, a plurality of different modulation states may be calculated in parallel and can be simultaneously presented on the modulation device with each one being addressed on the modulation device by quickly scanning the laser beam across the modulation device by the upstream scanning device. The increase in speed scales with the number of modulation states displayed simultaneously. Embodiments of the present disclosure are especially advantageous for applications where the laser beam needs to be switched or modulated very quickly, such as during laser beam scanning of a multi-spot array.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:

An apparatus for additively manufacturing three-dimensional objects, the apparatus comprising: a laser beam source configured to generate a laser beam; a modulation device disposed downstream of the laser beam source and configured to change at least one laser beam parameter of the laser beam generated by the laser beam source; and a scanning device disposed downstream of the laser beam source and upstream of the modulation device, the scanning device configured to scan the laser beam over at least a portion of the modulation device.

The apparatus of the previous clause, further comprising: a build platform configured to support a powder bed; and a deflection device disposed downstream of the modulation device and configured to selectively direct the laser beam onto the powder bed.

The apparatus of any previous clause, further comprising a beam shaping device disposed downstream of the laser beam source and upstream of the scanning device.

The apparatus of any previous clause, further comprising an optical relay device disposed downstream of the modulation device.

The apparatus of any previous clause, wherein the scanning device comprises a telecentric scanning device.

The apparatus of any previous clause, wherein the modulation device is configured to modulate at least one of an amplitude, a phase, or a polarization of the laser beam.

The apparatus of any previous clause, wherein the scanning devices comprises at least one movable mirror device.

The apparatus of any previous clause, further comprising at least one additional movable mirror device disposed downstream of the modulation device.

The apparatus of any previous clause, wherein the modulation device comprises a plurality of modulation segments, and wherein the scanning device is configured to selectively scan the laser beam over the plurality of modulation segments.

The apparatus of any previous clause, further comprising a controller communicatively coupled to the scanning device and configured to generate at least one control signal to control the scanning device to selectively scan the laser beam over the modulation device.

The apparatus of any previous clause, further comprising a controller communicatively coupled to the modulation device and configured to generate at least one control signal to control a modulation state of the modulation device.

The apparatus of any previous clause, wherein the scanning device is configured to selectively scan the laser beam in at least one direction across the modulation device.

The apparatus of claim 1, wherein the scanning device is configured to selectively scan the laser beam in at least two different directions across the modulation device.

The apparatus of any previous clause, wherein the laser beam source comprises one or more laser fibers or a laser array, and further comprising a laser array collimator disposed downstream of the one or more laser fibers or the laser array and upstream of the modulation device.

The apparatus of any previous clause, wherein the scanning device is configured to scan the laser beam laterally over at least the portion of the modulation device without introducing an angular offset into the laser beam.

A method for additively manufacturing three-dimensional objects, the method comprising: generating a laser beam with a laser beam source; modulating a first set of modulation segments of a modulation device disposed downstream of the laser beam source to a first modulation state; modulating a second set of modulation segments of the modulation device to a second modulation state different than the first modulation state; and scanning, via a scanning device disposed downstream of the laser beam source and upstream of the modulation device, the laser beam over the first and second sets of modulation segments.

The method of any previous clause, wherein scanning, via the scanning device, comprises scanning, via a telecentric scanning device, the laser beam over the first and second sets of modulation segments.

The method of any previous clause, wherein scanning, via the scanning device, comprises selectively moving at least one mirror device to direct the laser beam over the first and second sets of modulation segments.

The method of any previous clause, further comprising shaping, via a beam shaping device disposed upstream of the modulation device, the laser beam.

The method of any previous clause, further comprising directing, via a deflection device disposed downstream of the modulation device, the laser beam onto a powder bed.

The method of any previous clause, wherein scanning, via the scanning device, comprises scanning the laser beam laterally over at least the portion of the modulation device without introducing an angular offset into the laser beam.

The method of any previous clause, wherein scanning, via the scanning device, comprises scanning the laser beam in at least two different directions across the modulation device.

The method of any previous clause, further comprising generating, via a controller, at least one control signal to control the scanning device for scanning the laser beam over the modulation device.

The method of any previous clause, further comprising generating, via a controller, at least one control signal to control the modulating of the first and second sets of modulation segments.

A non-transitory computer-readable medium comprising computer-executable instructions, which, when executed by a processor associated with an additive manufacturing machine, cause the processor to perform a method comprising: controlling a laser beam source to generate a laser beam; modulating a first set of modulation segments of a modulation device disposed downstream of the laser beam source to a first modulation state; modulating a second set of modulation segments of the modulation device to a second modulation state different than the first modulation state; and scanning, via a scanning device disposed downstream of the laser beam source and upstream of the modulation device, the laser beam over the first and second sets of modulation segments.

The non-transitory computer-readable medium of any previous clause, wherein the computer-executable instructions, which when executed by the processor, causes the processor to perform the method comprising: controlling at least one mirror device for scanning the laser beam over the first and second sets of modulation segments.

The non-transitory computer-readable medium of any previous clause, wherein the computer-executable instructions, which when executed by the processor, causes the processor to perform the method comprising: directing, via a deflection device disposed downstream of the modulation device, the laser beam onto a powder bed.

The non-transitory computer-readable medium of any previous clause, wherein the computer-executable instructions, which when executed by the processor, causes the processor to perform the method comprising: controlling a telecentric scanning device for scanning the laser beam over the first and second sets of modulation segments.

The non-transitory computer-readable medium of any previous clause, wherein the computer-executable instructions, which when executed by the processor, causes the processor to perform the method comprising: scanning the laser beam laterally over at least the portion of the modulation device without introducing an angular offset into the laser beam.

The non-transitory computer-readable medium of any previous clause, wherein the computer-executable instructions, which when executed by the processor, causes the processor to perform the method comprising: scanning the laser beam in at least two different directions across the modulation device.

The non-transitory computer-readable medium of any previous clause, wherein the computer-executable instructions, which when executed by the processor, causes the processor to perform the method comprising: simultaneously displaying the first and second modulation states on the modulation device.

A method for additively manufacturing three-dimensional objects, the method comprising: modulating a first set of modulation segments of a modulation device to a first modulation state; with the first set of modulation segments modulated to the first modulation state, modulating a second set of modulation segments of the modulation device to a second modulation state different than the first modulation state; addressing the first set of modulation segments via one or more laser beams; switching the one or more laser beams from addressing the first set of modulation segments to addressing the second set of modulation segments via at least one of: steering the one or more laser beams from the first set of modulation segments to the second set of modulation segments; or switching from a first laser beam source generating the one or more laser beams addressing the first set of modulation segments to a second laser beam source generating the one or more laser beams addressing the second set of modulation segments; and directing the one or more laser beams onto a powder bed.

The method of any preceding clause, wherein steering comprises scanning, via a scanning device positioned upstream of the modulation device, the one or more laser beams from the first set of modulation segments to the second set of modulation segments.

The method of any preceding clause, further comprising shaping, via a beam shaping device disposed upstream of the modulation device, the one or more laser beams.

The method of any preceding clause, further comprising collimating the one or more laser beams.

The method of any preceding clause, wherein steering comprises scanning the one or more laser beams in at least two different directions across the modulation device.

The method of any preceding clause, wherein steering comprises scanning, via a telecentric scanning device positioned upstream of the modulation device, the one or more laser beams from the first set of modulation segments to the second set of modulation segments.

The method of any preceding clause, further comprising generating, via a controller communicatively coupled to the scanning device, at least one control signal to control the scanning device to selectively scan the one or more laser beams from the first set of modulation segments to the second set of modulation segments.

The method of any preceding clause, further comprising: setting the first set of modulation segments to a first modulation state; setting the second set of modulation segments to a second modulation state different than the first modulation state; and generating, via a controller communicatively coupled to the first laser beam source and the second laser beam source, at least one control signal to synchronize actuation of the first and second laser beam sources with the respective first and second modulation states.

The method of any preceding clause, further comprising generating, via a controller communicatively coupled to the first and second laser beam sources, at least one control signal to sequentially actuate or de-actuate the first and second laser beam sources.

The method of any preceding clause, wherein steering comprises scanning the one or more laser beams over at least the portion of the modulation device without introducing an angular offset into the one or more laser beams.

An apparatus for additively manufacturing three-dimensional objects, the apparatus comprising: a laser array configured to emit a plurality of laser beams; a modulation device disposed downstream of the lens array and configured to change at least one laser beam parameter of the plurality of laser beams; a controller configured to generate one or more control signals to: modulate a first set of modulation segments of the modulation device to a first modulation state and, with the first set of modulation segments modulated to the first modulation state, modulate a second set of modulation segments of the modulation device to a second modulation state different than the first modulation state; and modulate the laser array to sequentially address the first and second sets of modulation segments with a first laser beam of the plurality of laser beams addressing the first set of modulation segments and a second laser beam of the plurality of laser beams addressing the second set of modulation segments; and a deflection device configured to scan the first and second laser beams onto a powder bed.

The apparatus of any previous clause, further comprising a lens array configured to collimate each laser beam of the plurality of laser beams.

A non-transitory computer-readable medium comprising computer-executable instructions, which, when executed by a processor associated with an additive manufacturing machine, cause the processor to perform a method comprising: modulating a first set of modulation segments of a modulation device to a first modulation state; with the first set of modulation segments modulated to the first modulation state, modulating a second set of modulation segments of the modulation device to a second modulation state different than the first modulation state; addressing the first set of modulation segments via one or more laser beams; switching the one or more laser beams from addressing the first set of modulation segments to addressing the second set of modulation segments via at least one of: steering the one or more laser beams from the first set of modulation segments to the second set of modulation segments; or switching from a first laser beam source generating the one or more laser beams addressing the first set of modulation segments to a second laser beam source generating the one or more laser beams addressing the second set of modulation segments; and directing the one or more laser beams onto a powder bed.

## Claims

1. A method for additively manufacturing three-dimensional objects, the method comprising:
modulating a first set of modulation segments of a modulation device to a first modulation state;
with the first set of modulation segments modulated to the first modulation state, modulating a second set of modulation segments of the modulation device to a second modulation state different than the first modulation state;
addressing the first set of modulation segments via one or more laser beams;
switching the one or more laser beams from addressing the first set of modulation segments to addressing the second set of modulation segments via at least one of:
steering the one or more laser beams from the first set of modulation segments to the second set of modulation segments; or
switching from a first laser beam source generating the one or more laser beams addressing the first set of modulation segments to a second laser beam source generating the one or more laser beams addressing the second set of modulation segments; and
directing the one or more laser beams onto a powder bed.

2. The method of claim 1, wherein steering comprises scanning, via a scanning device positioned upstream of the modulation device, the one or more laser beams from the first set of modulation segments to the second set of modulation segments.

3. The method of any proceeding claim, further comprising shaping, via a beam shaping device disposed upstream of the modulation device, the one or more laser beams.

4. The method of any preceding claim, further comprising collimating the one or more laser beams.

5. The method of any preceding claim, wherein steering comprises scanning the one or more laser beams in at least two different directions across the modulation device.

6. The method of any preceding claim, wherein steering comprises scanning, via a telecentric scanning device positioned upstream of the modulation device, the one or more laser beams from the first set of modulation segments to the second set of modulation segments.

7. The method of any preceding claim, further comprising generating, via a controller communicatively coupled to a scanning device, at least one control signal to control the scanning device for steering the one or more laser beams from the first set of modulation segments to the second set of modulation segments; and/or
further comprising:
setting the first set of modulation segments to a first modulation state;
setting the second set of modulation segments to a second modulation state different than the first modulation state; and
generating, via a controller communicatively coupled to the first laser beam source and the second laser beam source, at least one control signal to synchronize actuation of the first and second laser beam sources with the respective first and second modulation states; and/or
further comprising generating, via a controller communicatively coupled to the first and second laser beam sources, at least one control signal to sequentially actuate or de-actuate the first and second laser beam sources.

8. The method of any preceding claim, wherein steering comprises scanning the laser beam over at least the portion of the modulation device without introducing an angular offset into the one or more laser beams.

9. An apparatus for additively manufacturing three-dimensional objects, the apparatus comprising:
a laser beam source configured to generate a laser beam;
a modulation device disposed downstream of the laser beam source and configured to change at least one laser beam parameter of the laser beam generated by the laser beam source; and
a scanning device disposed downstream of the laser beam source and upstream of the modulation device, the scanning device configured to scan the laser beam over at least a portion of the modulation device.

10. The apparatus of claim 9, further comprising:
a build platform configured to support a powder bed; and
a deflection device disposed downstream of the modulation device and configured to selectively direct the laser beam onto the powder bed; and/or
further comprising a beam shaping device disposed downstream of the laser beam source and upstream of the scanning device; and/or
further comprising an optical relay device disposed downstream of the modulation device; and/or
wherein the scanning device comprises a telecentric scanning device.

11. The apparatus of any one of claims 9 to 10, wherein the modulation device is configured to modulate at least one of an amplitude, a phase, or a polarization of the laser beam.

12. The apparatus of claim 11, wherein the modulation device comprises a plurality of modulation segments, and wherein the scanning device is configured to selectively scan the laser beam over the plurality of modulation segments.

13. The apparatus of any one of claims 9 to 12, further comprising a controller communicatively coupled to the scanning device and configured to generate at least one control signal to control the scanning device to selectively scan the laser beam over at least the portion of the modulation device.

14. The apparatus of any one of claims 9 to 13, wherein the scanning device is configured to selectively scan the laser beam in at least two different directions across at least the portion of the modulation device.

15. A non-transitory computer-readable medium comprising computer-executable instructions, which, when executed by a processor associated with an additive manufacturing machine, cause the processor to perform a method comprising:
modulating a first set of modulation segments of a modulation device to a first modulation state;
with the first set of modulation segments modulated to the first modulation state, modulating a second set of modulation segments of the modulation device to a second modulation state different than the first modulation state;
addressing the first set of modulation segments via one or more laser beams;
switching the one or more laser beams from addressing the first set of modulation segments to addressing the second set of modulation segments via at least one of:
steering the one or more laser beams from the first set of modulation segments to the second set of modulation segments; or
switching from a first laser beam source generating the one or more laser beams addressing the first set of modulation segments to a second laser beam source generating the one or more laser beams addressing the second set of modulation segments; and
directing the one or more laser beams onto a powder bed.
